# EUROPÄISCHE PATENTSCHRIFT

(11) **EP 1 621 240 B1**
(45) Veröffentlichungstag und Bekanntmachung des Hinweises auf die Patenterteilung: **13.08.2008**
(21) Anmeldenummer: 05012820.6
(22) Anmeldetag: 15.06.2005
(51) Int. Cl.: B01D 29/15

(54) **Ringfilter**
Ring filter
Filtre annulaire

(30) Priorität: 29.07.2004 US 592227 P
(43) Veröffentlichungstag der Anmeldung: 01.02.2006
(73) Patentinhaber: Schaeffler KG, 91074 Herzogenaurach (DE)
(72) Erfinder: Radcliffe, Scott, Berkley, MI 48072 (US)

(56) Entgegenhaltungen:
- GB-A- 996 945
- PATENT ABSTRACTS OF JAPAN Bd. 017, Nr. 017 (C-1016), 13. Januar 1993 (1993-01-13) & JP 04 244205 A (SHINKO PANTEC CO LTD), 1. September 1992 (1992-09-01)

## Beschreibung

### Gebiet der Erfindung

Die Erfindung betrifft Ringfilter zur Filtration von Hydraulikmittel, mit einem Filterabschnitt, der Im Wesentlichen in Form einer Zylindermantelfläche ausgeführt ist, wobei der Ringfilter in Umfangsrichtung in sich geschlossen und reversibel dehnbar ausgeführt ist.

Es sind Filter zur Filtration von Hydraulik- und Schmiermittel bekannt, die sensible Bauteile einer Maschine die an einen Hydraulik- oder Schmiermittelkreislauf angeschlossen sind vor dem Eintritt von Schmutzpartikeln zusammen mit dem Hydraulik- bzw. Schmiermittel schützen. Derartige Bauteile können beispielsweise hydraulische Spielausgleichselemente, schaltbare Nockenfolger eines Ventiltriebs einer Brennkraftmaschine oder hydraulische Wegeventile, insbesondere Schieberwegeventile, sein. Derartige Maschinenbauteile bestehen aus mehreren gegeneinander bewegten Elementen, die einen geringen Abstand zueinander aufweisen.

Ein Filter ist beispielsweise aus der JP 04-4422085A bekannt. Dieser Filter weist eine Filterschicht auf, die in der Form eines Rings ausgebildet ist und aus mehreren Schichten von dehnbaren Fasern bestehet.

Aus der GB 996,945 ist eine Filterkerze bekannt, die von einer Filterhülle umgeben ist. Die Filterhülle besteht aus einem verformbaren und dehnbaren mit Poren versehen Stoff, wie z.B. ein dehnbares Netzgewebe oder ein elastischer Stoff (Gummi, nachgiebiges plastisches Material usw.).

Hydraulische Schieberwegeventile bestehen beispielsweise aus einem im Wesentlichen hohlzylindrisch ausgeführten Ventilgehäuse mit mehreren Anschlüssen, in dem ein Steuerkolben axial verschiebbar angeordnet ist. Die Anschlüsse sind als Öffnungen im Ventilgehäuse ausgeführt, durch die Hydraulikmittel in das Gehäuse einströmen oder aus dem Gehäuse herausströmen kann. Die Öffnungen münden meist in Ringnuten, die in der Außenmantelfläche des Ventilgehäuses ausgebildet sind. Die Außenmantelfläche des im Wesentlichen zylindrisch ausgeführten Steuerkolbens ist der Innenmantelfläche des Ventilgehäuses im Wesentlichen angepasst. Weiterhin ist der Steuerkolben mit mehreren axial zueinander beabstandeten Ringnuten versehen, wodurch die Anschlüsse des Wegeventils wahlweise miteinander verbunden oder voneinander getrennt werden können. Treten Schmutzpartikel in das Wegeventil ein so besteht die Gefahr, dass diese zwischen den Steuerkolben und das Ventilgehäuse gelangen und damit zum Verklemmen des Wegeventils führen.

In der DE 100 27 080 C2 ist ein derartiges 4/3-Wegeventil (Steuerventil) zur Steuerung eines hydraulischen Nockenwellenverstellers dargestellt. Der Hydraulikmittelanschluss, die Arbeitsanschlüsse und die Tankanschlüsse sind als Ringnuten an der äußeren Mantelfläche des Ventilgehäuses ausgebildet, in deren Nutgründen Öffnungen im Ventilgehäuse ausgebildet sind. Um das Eindringen von Schmutz in das Innere des Wegeventils zu verhindern, ist vorgesehen innerhalb jeder Ringnut einen Ringfilter anzuordnen. Jeder der Ringfilter besteht aus einem Filterabschnitt und einem Rahmen, welcher den Filterabschnitt einschließt. Die Filter weisen im Wesentlichen einen C-förmigen Querschnitt auf, wobei die zwei offenen Enden des Filters aufeinander zu weisen. Die zwei offenen Enden sind mit formschlüssigen Mitteln versehen, mittels derer der Filter nach dem Einlegen in die Ringnut verschlossen werden kann.

Nachteilig wirkt sich bei dieser Ausführungsform der hohe Aufwand während der Montage des Filters am Ventilgehäuse aus. Der Filter wird in die Ringnut eingelegt und anschließend müssen die formschlüssigen Mittel innerhalb der Ringnut in Eingriff gebracht werden.
Bei unsachgemäßer Montage des Filters besteht während des Einbauvorgangs des Steuerventils in die Ventilaufnahme die Gefahr, dass sich der Filter zwischen Steuerventil und Ventilaufnahme verkantet und beschädigt oder sogar abgeschert wird.
Weiterhin kann sich der Verschluss des Hydraulikmittelfilters aufgrund unsachgemäßer Montage oder der während des Betriebs der Brennkraftmaschine herrschenden Kräfte öffnen. Dies hat zur Konsequenz, dass Schmutzpartikel in das von dem Filter zu schützende Bauteil eindringen können und es zu oben genannten Problemen kommt.

### Zusammenfassung der Erfindung

Der Erfindung liegt daher die Aufgabe zugrunde diese geschilderten Nachteile zu vermeiden und somit einen Ringfilter zu schaffen, wobei die Filtermontage erleichtert, deren Prozesssicherheit erhöht und die dauerhafte Funktion des Ringfilters gesichert ist.

Erfindungsgemäß wird diese Aufgabe dadurch gelöst, dass der Filterabschnitt aus mindestens einem ersten und einem zweiten Segmenten besteht, die abwechselnd in Umfangsrichtung angeordnet sind, wobei das zweite Segment hyraulikmittelundurchlässig ist und aus einem dehnbaren Material besteht und das erste Segment als nicht dehnbares Filtersieb ausgebildet ist.

Der Ringfilter ist in Umfangsrichtung in sich geschlossen und reversibel dehnbar ausgeführt. In dieser Ausführungsform sind dessen innere Abmessungen den äußeren Abmessungen des Nutgrunds der Ringnut, in die der Ringfilter eingesetzt werden soll, angepasst. Zur Montage wird der Ringfilter in Umfangsrichtung gedehnt, wodurch sich ebenfalls sein Radius vergrößert. Der Ringfilter kann in gedehntem Zustand über das Bauteil geschoben und im Bereich der Ringnut positioniert werden. Nach dem Erreichen der gewünschten Position wird die Krafteinwirkung, die zur Dehnung des Ringfilters führte, beendet, wodurch der Ringfilter seine ursprüngliche Form wieder annimmt. Dabei ist der Ringfilter so ausgebildet, dass der innerhalb der gesamten Ringnut kraftschlüssig an deren Nutgrund anliegt.

In einer ersten Konkretisierung der Erfindung ist der Filterabschnitt als Filtersieb ausgebildet und besteht aus einem dehnbaren Material.
In dieser Ausführungsform wird während des Montagevorgangs die gesamte Zylindermantelfläche des Filterabschnitts gedehnt.

In einer alternativen Ausführungsform der Erfindung besteht der Filterabschnitt in Umfangsrichtung aus mindestens einem ersten und einem zweiten Segment, die abwechselnd in Umfangsrichtung angeordnet sind, wobei das zweite Segment hydraulikmittelundurchlässig ist und aus einem dehnbaren Material besteht und das erste Segment als nicht dehnbares Filtersieb ausgebildet ist.
Das Filtersieb kann aus Metall bestehen. In diesem Fall wird ein herkömmliches, bevorzugt planar rechteckig ausgeführtes Filtersieb verwendet, wobei zwei gegenüberliegende Enden aufeinander zugebogen sind. Die Enden des Filtersiebs stehen sich in einer gewissen Entfernung gegenüber. Diese Entfernung wird von einem zweiten Segment aus dehnbarem Material überbrückt, das die Enden des Filtersiebs miteinander verbindet. Dies ist vorteilhafterweise dadurch realisiert, dass das dehnbare Material beim Herstellen des Filterabschnitts in das Filtergewebe hineinfließt. Das Filtersieb kann aus Metall oder Kunststoff bestehen. Das zweite Segment besteht vorteilhafterweise aus einem Elastomer.
Während der Montage wird der Ringfilter ausschließlich in den Bereichen die aus dehnbarem Material bestehen aufgeweitet. Der Ringfilter wird in aufgeweitetem Zustand über das Maschinenbauteil geführt und im Bereich der Nut positioniert. Nach Beendigung der Krafteinwirkung, die zur Dehnung des Ringfilters geführt hatte, nehmen die dehnbaren Segmente und damit der gesamte Ringfilter ihre ursprüngliche Form an, wodurch der Ringfilter am Nutgrund der Ringnut zum Anliegen kommt.
Ebenso denkbar ist die Ausbildung des Filterabschnitts mit mehreren hydraulikmittelundurchlässigen Segmenten, die aus einem dehnbaren Material bestehend, zwischen denen nicht dehnbare Filtersiebsegmente angeordnet sind. Durch die Ausführung des Filterabschnitts mit mehreren dehnbaren Bereichen kann der Ringfilter in Umfangsrichtung weiter gedehnt werden bevor eine irreversible Schädigung der dehnbaren Segmente eintritt.

Weiterhin kann an den in axialer Richtung liegenden Stirnseiten des Filterabschnitts jeweils ein ringförmig ausgebildetes Rahmenelement vorgesehen sein, welches entlang seines gesamten Umfangs mit dem Filterabschnitt verbunden ist und aus einem dehnbaren Material besteht.
Die stirnseitigen Enden des zylindermantelflächenförmigen Filterabschnitts sind jeweils mit einem Rahmenelement verbunden, welches ebenfalls aus einem dehnbaren Material besteht. Dies kann beispielsweise dadurch realisiert werden, dass während des Herstellungsprozesses des Ringfilters das Elastomer über Bereiche des Filterabschnitts fließt und diese Bereiche in sich aufnimmt. Vorteilhafterweise ist der Innendurchmesser der Rahmenelemente kleiner als der Innendurchmesser des Filterabschnitts und gleichzeitig der Außendurchmesser der Rahmenelemente größer als der Außendurchmesser des Filterabschnitts.
Im montierten Zustand des Ringfilters sitzt dieser mit den beiden elastischen Rahmenelementen auf dem Nutgrund der Ringnut auf. Die Rahmenelemente sind derart ausgelegt, dass eine radial nach innen gerichtete Kraft auf den Nutgrund wirkt. Dadurch ist gewährleistet, dass das Hydraulikmittel nicht zwischen den Rahmenelementen und dem Nutgrund, und damit am Filterabschnitt vorbei, fließen kann. Weiterhin wird, auf Grund der unterschiedlichen Innen- und Außendurchmesser des Filterabschnitts und der Rahmenelemente, zwischen dem Nutgrund und dem Filterabschnitt eine Ringnut ausgebildet, wodurch die aktive Filterfläche vergrößert wird.

Während der Montage werden sowohl die hydraulikmittelundurchlässigen Segmente als auch die Rahmenelemente gedehnt. In der richtigen Position angelangt bewirken nun sowohl die hydraulikmittelundurchlässigen Segmente als auch die Rahmenelemente eine Umfangsverkleinerung des Ringfilters, wodurch dieser sicher und unverlierbar zum Anliegen am Nutgrund der Ringnut kommt.

Weiterhin ist vorgesehen, den Ringfilter innerhalb einer ersten Ringnut eines Steuerventils eines Nockenwellenverstellers anzuordnen, wobei die erste Ringnut in eine Außenmantelfläche eines Ventilgehäuses des Steuerventils eingebracht ist und als Anschluss für Druckmittel dient. Alternativ kann der Ringfilter innerhalb einer Ringnut eines hydraulischen Schaltelements eines schaltbaren Ventiltriebs angeordnet sein, wobei die Ringnut in eine Außenmantelfläche des Schaltelements des Ventiltriebs eingeformt ist und als Druckmittelanschluss dient.

### Kurze Beschreibung der Zeichnungen

Weitere Merkmale der Erfindung ergeben sich aus der nachfolgenden Beschreibung und aus den Zeichnungen, in der ein Ausführungsbeispiel der Erfindung vereinfacht dargestellt ist. Es zeigen:
- Figur 1a: eine perspektivische Ansicht eines erfindungsgemäßen Ringfilters,
- Figur 1b: eine Seitenansicht eines erfindungsgemäßen Ringfilters,
- Figur 1c: einen Längsschnitt durch einen erfindungsgemäßen Ringfilter entlang der Linie I-I aus Figur 1b,
- Figur 2: einen Querschnitt einer Vorrichtung zur Veränderung der Steuerzeiten einer Brennkraftmaschine,
- Figur 3: einen Längsschnitt durch die Vorrichtung zur Veränderung der Steuerzeiten einer Brennkraftmaschine entlang der Linie III-III aus Figur 2, mit einem 4/3-Wegeventil,
- Figur 4: einen Längsschnitt durch ein 4/3-Wegeventil zur Steuerung der Vorrichtung aus Figur 2 und 3, mit einem erfindungsgemäßen Ringfilter,
- Figur 5: ein Bauteil eines Ventiltriebs mit einem erfindungsgemäßen Ringfilter.

### Ausführliche Beschreibung der Zeichnungen

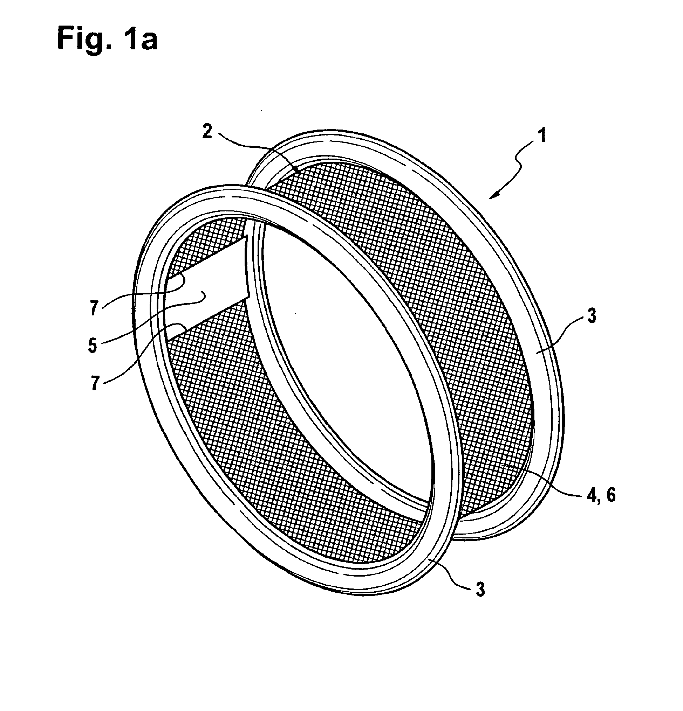

In den Figuren 1a bis 1c ist ein erfindungsgemäßer Ringfilter 1 dargestellt. Er besteht aus einem Filterabschnitt 2 und zwei Rahmenelementen 3. Der Filterabschnitt 2 setzt sich aus einem ersten und einem zweiten Segment 4, 5 zusammen. Das erste Segment 4 ist als ein rechteckiges Filtersieb 6 ausgeführt, wobei das Filtersieb 6 kreisbogenförmig gebogen ist und die in Umfangsrichtung offenen Enden 7 sich gegenüberstehen. Die offenen Enden 7 sind mittels des zweiten Segments 5 miteinander verbunden, wodurch der Filterabschnitt 2 die Form einer Zylindermantelfläche erhält. Das zweite Segment 5 besteht aus einem dehnbaren Material und ist hydraulikmittelundurchlässig ausgeführt. In einer vorteilhaften Ausführungsform der Erfindung besteht das zweite Segment 5 aus einem Elastomer. Die Verbindung zwischen dem ersten Segment 4 und dem zweiten Segment 5 wird beispielsweise dadurch hergestellt, dass das Elastomer das Filtersieb 6 in einem bestimmten Bereich durchdringt.

Die in Axialrichtung liegenden Stirnseiten des Filterabschnitts 2 sind mit jeweils einem Rahmenelement 3 versehen. Je ein Rahmenelement 3 erstreckt sich entlang des gesamten Umfangs einer Stirnseite des Filterabschnitts 2. Die Rahmenelemente 3 haben unter anderem die Aufgabe die zylindermantelförmige Form des Filterabschnitts 2 dauerhaft zu gewährleisten. Die Rahmenelemente 3 bestehen aus einem dehnbaren Material, vorzugsweise demselben wie das zweite Segment 5, und sie sind vorzugsweise einteilig mit dem zweiten Segment 5 ausgeführt.

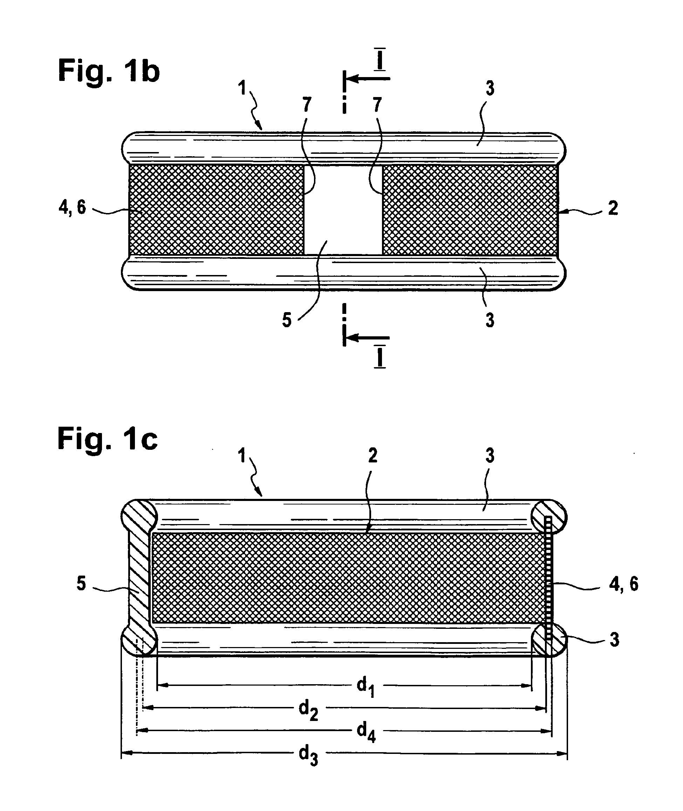

Figur 1c zeigt einen Längsschnitt durch einen erfindungsgemäßen Ringfilter 1 entlang der Linie I-I der Figur 1b. Deutlich zu erkennen ist, dass der Innendurchmesser d1 der Rahmenelemente 3 kleiner ausgeführt ist als der Innendurchmesser d2 des Filterabschnitts 2. Ebenso ist der Außendurchmesser d3 der Rahmenelemente 3 größer ausgeführt als der Außendurchmesser d4 des Filterabschnitts 2.
Das erste Segment 4 des Filterabschnitts 2 ist mit den Rahmenelementen 3 fest verbunden. Ähnlich der Verbindung zwischen dem ersten und dem zweiten Segment 4, 5 ist auch bei dieser Verbindung vorgesehen, dass das dehnbare Material der Rahmenelemente 3 Bereiche des Filtersiebs 6 durchdringt.

Die Funktion des Ringfilters 1 soll im Folgenden am Beispiel eines Wegeventils (Steuerventil 8) zur Steuerung einer Vorrichtung 9 zur Veränderung der Steuerzeiten einer Brennkraftmaschine erläutert werden.

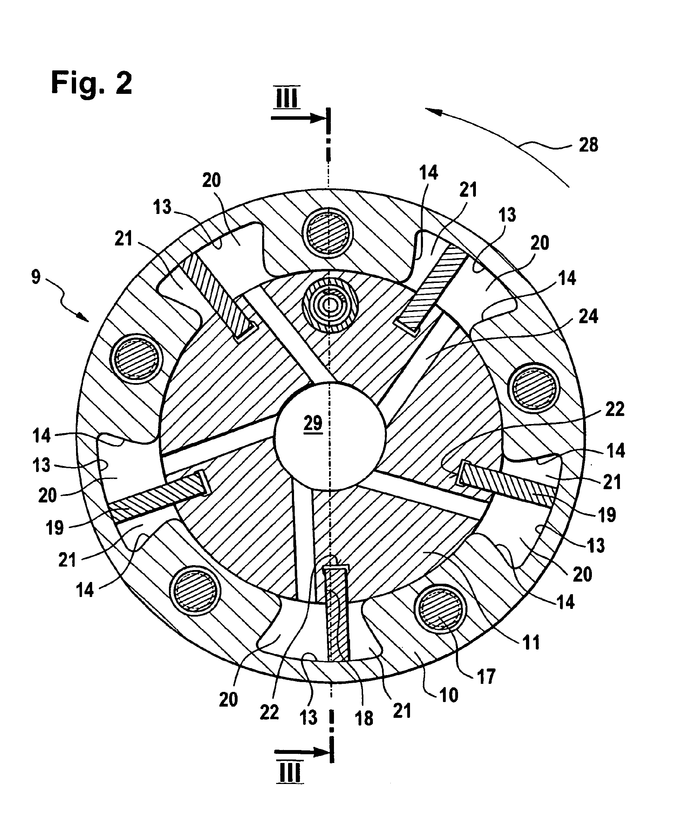

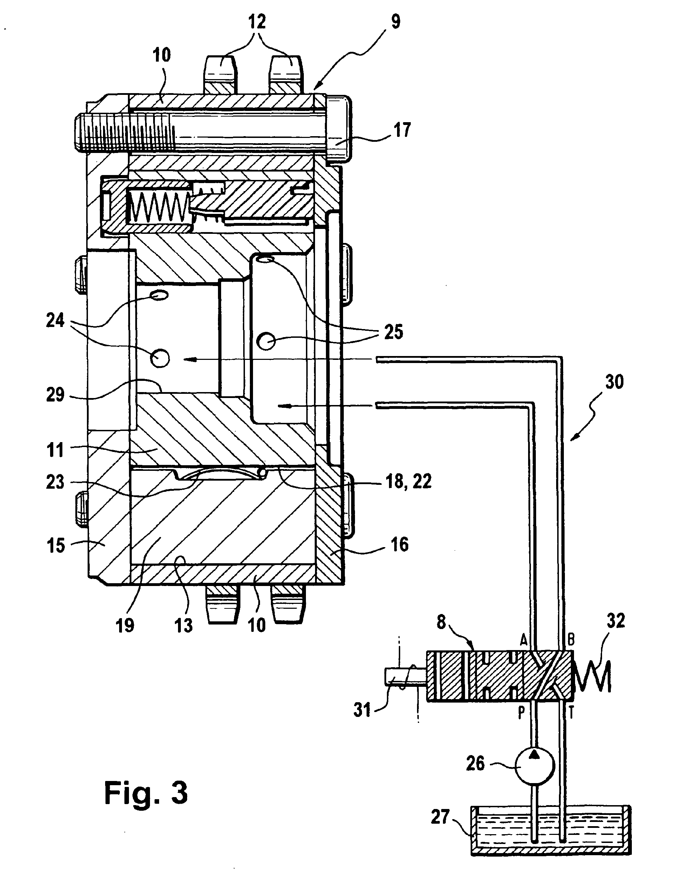

Die Figuren 2 und 3 zeigen eine Vorrichtung 9 zur Veränderung der Steuerzeiten einer Brennkraftmaschine. Die Vorrichtung 9 besteht im Wesentlichen aus einem Stator 10 und einem konzentrisch dazu angeordneten Rotor 11. Ein Antriebsrad 12 ist drehfest mit dem Stator 10 verbunden und in der dargestellten Ausführungsform als Kettenrad ausgeführt. Der Stator 10 ist drehbar auf dem Rotor 11 gelagert, wobei an der Innenmantelfläche des Stators 10 in der dargestellten Ausführungsform fünf in Umfangsrichtung beabstandete Ausnehmungen 13 vorgesehen sind. Die Ausnehmungen 13 werden in radialer Richtung vom Stator 10 und dem Rotor 11, in Umfangsrichtung von zwei Seitenwänden 14 des Stators 10 und in axialer Richtung durch einen ersten und einen zweiten Seitendeckel 15, 16 begrenzt. Jede der Ausnehmungen 13 ist auf diese Weise druckdicht verschlossen. Der erste und der zweite Seitendeckel 15, 16 sind mit dem Stator 10 mittels Verbindungselementen 17, beispielsweise Schrauben, verbunden.

An der Außenmantelfläche des Rotors 11 sind axial verlaufende Flügelnuten 18 ausgebildet, wobei in jeder Flügelnut 18 ein sich radial erstreckender Flügel 19 angeordnet ist. In jede Ausnehmung 13 erstreckt sich ein Flügel 19, wobei die Flügel 19 in radialer Richtung am Stator 10 und in axialer Richtung an den Seitendeckeln 15, 16 anliegen. Jeder Flügel 19 unterteilt eine Ausnehmung 13 in zwei gegeneinander arbeitende Druckkammern 20, 21. Um ein druckdichtes Anliegen der Flügel 19 am Stator 10 zu gewährleisten, sind zwischen den Nutgründen 22 der Flügelnuten 18 und den Flügeln 19 Blattfederelemente 23 angebracht, die den Flügel 19 in radialer Richtung mit einer Kraft beaufschlagen.

Mittels ersten und zweiten Druckmittelleitungen 24, 25 können die ersten und zweiten Druckkammern 20, 21 über ein Steuerventil 8 mit einer Hydraulikmittelpumpe 26 oder einem Tank 27 verbunden werden. Dadurch wird ein Stellantrieb ausgebildet, der eine Relativverdrehung des Stators 10 gegenüber dem Rotor 11 ermöglicht. Dabei ist vorgesehen, dass entweder alle ersten Druckkammern 20 mit der Hydraulikmittelpumpe 26 und alle zweiten Druckkammern 21 mit dem Tank 27 verbunden werden bzw. die genau entgegen gesetzte Konfiguration. Werden die ersten Druckkammern 20 mit der Hydraulikmittelpumpe 26 und die zweiten Druckkammern 21 mit dem Tank 27 verbunden, so dehnen sich die ersten Druckkammern 20 auf Kosten der zweiten Druckkammern 21 aus. Daraus resultiert eine Verschiebung der Flügel 19 in Umfangsrichtung, in der durch den Pfeil 28 dargestellten Richtung. Durch das Verschieben der Flügel 19 wird der Rotor 11 relativ zum Stator 10 verdreht.

Der Stator 10 wird in der dargestellten Ausführungsform mittels eines an seinem Antriebsrad 12 angreifenden, nicht dargestellten Kettentriebs von der Kurbelwelle angetrieben. Ebenso denkbar ist der Antrieb des Stators 10 mittels eines Riemen- oder Zahnradtriebs. Der Rotor 11 ist kraft-, form- oder stoffschlüssig, beispielsweise mittels Presssitz oder durch eine Schraubverbindung mittels einer Zentralschraube, mit einer nicht dargestellten Nockenwelle verbunden. Aus der Relativverdrehung des Rotors 11 relativ zum Stator 10, als Folge des Zu- bzw. Ableitens von Hydraulikmittel zu bzw. aus den Druckkammern 20, 21, resultiert eine Phasenverschiebung zwischen Nockenwelle und Kurbelwelle. Durch gezieltes Ein- bzw. Ableiten von Hydraulikmittel in die Druckkammern 20, 21 können somit die Steuerzeiten der Gaswechselventile der Brennkraftmaschine gezielt variiert werden.

Die Druckmittelleitungen 24, 25 sind in der dargestellten Ausführungsform als im Wesentlichen radial angeordnete Bohrungen ausgeführt, die sich von einer Zentralbohrung 29 des Rotors 11 zur dessen äußerer Mantelfläche erstrecken. Innerhalb der Zentralbohrung 29 kann ein nicht dargestelltes Zentralventil angeordnet sein, über welches die Druckkammern 20, 21 gezielt mit der Hydraulikmittelpumpe 26 bzw. dem Tank 27 verbunden werden können. Eine weitere Möglichkeit besteht darin, innerhalb der Zentralbohrung 29 einen Druckmittelverteiler anzuordnen, der die Druckmittelleitungen 24, 25 über Druckmittelkanäle und Ringnuten mit den Anschlüssen eines extern angebrachten Steuerventils 8 verbindet.

In Figur 3 ist zusätzlich der Hydraulikkreislauf 30 dargestellt. Aus einem Tank 27 wird mittels einer Hydraulikmittelpumpe 26 ein Hydraulikmittelanschluss P eines Steuerventils 8 mit Hydraulikmittel versorgt. Gleichzeitig wird über einen Tankanschluss T Hydraulikmittel vom Steuerventil 8 in den Tank 27 geleitet. Das Steuerventil 8 besitzt weiterhin zwei Arbeitsanschlüsse A, B. Mittels eines elektromagnetischen Stellgliedes 31, das gegen die Federkraft eines ersten Federelements 32 wirkt, kann das Steuerventil 8 in drei Stellungen gebracht werden. In einer ersten Stellung des Steuerventils 8, die einem unbestromten Zustand des Stellgliedes 31 entspricht, wird der Arbeitsanschluss A mit dem Tankanschluss T und der Hydraulikmittelanschluss P mit dem Arbeitsanschluss B und somit mit der zweiten Druckkammer 21 verbunden. In einer mittleren Stellung sind sowohl der Arbeitsanschluss A als auch der Arbeitsanschluss B sowohl vom Hydraulikmittelanschluss P als auch vom Tankanschluss T getrennt. In einer dritten Stellung des Steuerventils 8 ist der Hydraulikmittelanschluss P mit dem Arbeitsanschluss A und folglich mit der ersten Druckkammer 20 verbunden, während die zweite Druckkammer 21 über den Arbeitsanschluss B mit dem Tankanschluss T verbunden ist.

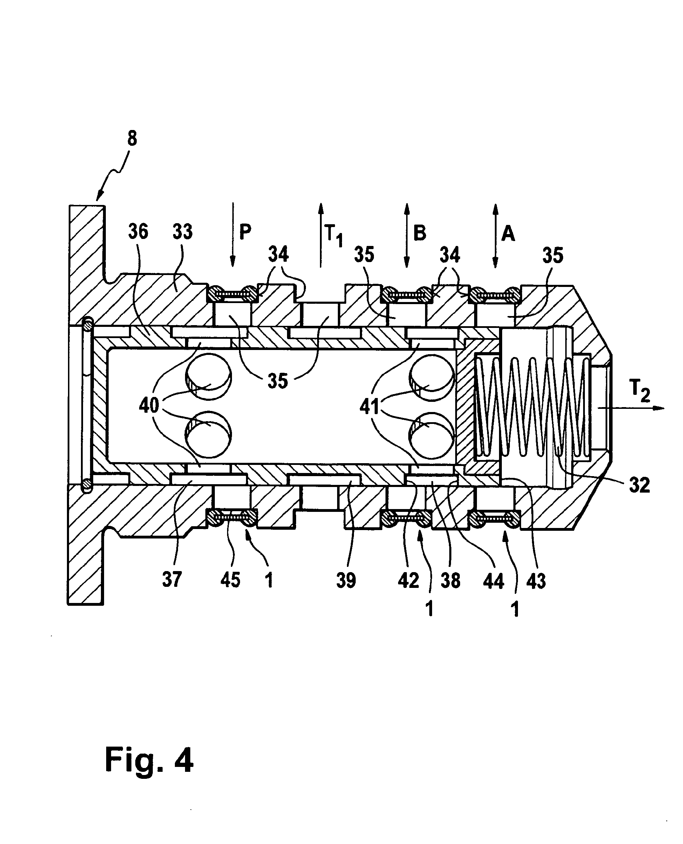

In Figur 4 ist ein Steuerventil 8 im Längsschnitt dargestellt. Das im Wesentlichen hohlzylindrisch ausgeführte Ventilgehäuse 33 ist mit einem radialen Hydraulikmittelanschluss P, einem radialen Tankanschluss T₁, zwei Arbeitanschlüssen A, B und einem axialen Tankanschluss T₂ versehen. Die radialen Anschlüsse P, T₁, A, B sind als axial zueinander beabstandete erste Ringnuten 34 ausgebildet, die in die Außenmantelfläche des Ventilgehäuses 33 eingebracht sind. Die ersten Ringnuten 34 sind mit mehreren ersten Öffnungen 35 versehen, die in das Innere des Ventilgehäuses 33 münden.
Innerhalb des Ventilgehäuses 33 ist ein ebenfalls im Wesentlichen hohlzylindrisch ausgeführter Steuerkolben 36 axial verschiebbar angeordnet. Mittels eines nicht dargestellten Stellgliedes 31 kann der Steuerkolben 36 gegen die Federkraft des ersten Federelements 32 innerhalb zweier Extremwerte in eine beliebige Position gerbacht und gehalten werden.
Die Außenmantelfläche des Steuerkolbens 36 ist mit einer zweiten, einer dritten und einer vierten Ringnut 37, 38, 39 versehen. Die zweite und die dritte Ringnut 37, 38 kommunizieren über zweite und dritte Öffnungen 40, 41 mit dem Inneren des Steuerkolbens 36. Die zweite Ringnut 37 ist derart ausgebildet, dass sie in jeder Stellung des Steuerkolbens 36 relativ zum Ventilgehäuse 33 mit den ersten Öffnungen 35 der ersten Ringnut 34 des Hydraulikmittelanschlusses P kommuniziert.

Während des Betriebs der Brennkraftmaschine gelangt Hydraulikmittel vom Hydraulikmittelanschluss P über die zweite Ringnut 37 und die zweiten Öffnungen 40 in das Innere des Steuerkolbens 36. In der in Figur 4 dargestellten ersten Stellung des Steuerkolbens 36 gelangt das Hydraulikmittel über die dritten Öffnungen 41 und die dritte Ringnut 38 zum Arbeitsanschluss B. Durch Beaufschlagung der zweiten Druckkammern 21 über den Arbeitsanschluss B mit Hydraulikmittel wird Hydraulikmittel aus den zweiten Druckkammern 20 zum Arbeitsanschluss A verdrängt und gelangt über dessen erste Öffnungen 35 zum axial angeordneten Tankanschluss T₂.
Wird das elektromagnetische Stellglied 31 bestromt, so wird der Steuerkolben 36 gegen die Federkraft des ersten Federelements 32 verschoben. Als Folge nimmt die Überdeckung der ersten Öffnungen 35 des Arbeitsanschlusses B durch eine erste Steuerkante 42 der dritten Ringnut 38 zu. Gleichermaßen nimmt auch die Überdeckung der ersten Öffnungen 35 des Arbeitsanschlusses A durch eine zweite Steuerkante 43 des Steuerkolbens 36 zu. Erreicht der Steuerkolben 36 eine nicht dargestellte Mittenstellung so ist der Arbeitsanschluss A, durch vollständige Überdeckung der zweiten Steuerkante 43, nicht mehr mit dem axialen Tankanschluss T₂ verbunden. Weiterhin kommuniziert weder der Arbeitsanschluss A noch der Arbeitsanschluss B mit der dritten Ringnut 38.

Alternativ kann der Steuerkolben 36 derart ausgeführt sein, dass in der Mittelstellung beide Arbeitsanschlüsse A, B mit der dritten Ringnut 38 kommunizieren.
Wird der Steuerkolben 36 weiter entgegen der Federkraft des ersten Federelements 32 verschoben so gibt eine dritte Steuerkante 44 die ersten Öffnungen 35 des Arbeitsanschlusses A zur dritten Ringnut 38 frei. Vom Hydraulikmittelanschluss P einströmendes Hydraulikmittel gelangt nun ausschließlich zum Arbeitsanschluss A. Gleichzeitig kommuniziert die vierte Ringnut 39 sowohl mit dem Arbeitsanschluss B als auch mit dem radialen Tankanschluss T₁. Auf diese Weise gelangt Hydraulikmittel von der Hydraulikmittelpumpe 26 in die ersten Druckkammern 20, was zu einer relativen Verdrehung des Rotors 11 zum Stator 10 führt. Das aus den zweiten Druckkammern 21 verdrängte Hydraulikmittel gelangt über den Arbeitsanschluss B und die vierte Ringnut 39 zum radialen Tankanschluss T₁.

Innerhalb der ersten Ringnuten 34 ist jeweils ein erfindungsgemäßer Ringfilter 1 angeordnet. Die Rahmenelemente 3 sind derart ausgeführt, dass diese im nicht gedehnten Zustand fest an der Außenmantelfläche des Nutgrunds der ersten Ringnut 34 zum Anliegen kommen. Während der Montage wird das zweite Segment 5 des Ringfilters 1 in Umfangsrichtung gedehnt, wodurch sich der Innendurchmesser d2 des Filterabschnitts 2 vergrößert. Gleichzeitig vergrößert sich auch der Innendurchmesser d1 der dehnbar ausgeführten Rahmenelemente 3. Der Ringfilter 1 kann nun über das Steuerventil 8 geschoben und im Bereich einer ersten Ringnut 34 positioniert werden. Im positionierten Zustand wird die Krafteinwirkung auf das zweite Segment 5 beendet, wodurch der Ringfilter 1 seine ursprüngliche Form wieder annimmt und die Rahmenelemente 3 kraftschlüssig dichtend am Nutgrund einer der ersten Ringnuten 34 zum Anliege kommen. Hydraulikmittel, welches aus im Nutgrund der ersten Ringnuten 34 ausgebildeten ersten Öffnungen 35 austritt, wird durch die kraftschlüssige Verbindung der Rahmenelemente 3 mit dem Nutgrund daran gehindert in axialer Richtung am Filterabschnitt 2 vorbei zufließen und kann somit nur über das erste Filtersieb 6 des Filterabschnitts 2 entweichen. Durch die unterschiedliche Größe der Innendurchmesser d1, d2 bzw. der Außendurchmesser d3, d4 ist zwischen den Nutgründen und den Filterabschnitten 2 bzw. den Filterabschnitten 2 und dem angrenzenden Maschinenbauteil jeweils eine Filternut 45 ausgebildet. Von einer der ersten Öffnung 35 bzw. einem Anschluss in eine der Filternuten 45 einströmendes Hydraulikmittel kann sich nun entlang des gesamten Umfangs des Filterabschnitts 2 verteilen, wodurch die aktive Filterfläche des Ringfilters 1 erheblich erhöht wird.

Neben der Ausführungsform des Ringfilters 1 als zylindermantelförmiges Bauteil sind natürlich auch Varianten denkbar, in denen der Querschnitt des Ringfilters 1 die Form einer beliebigen geschlossenen Kurve, wie beispielsweise einer Ellipse, eines n-Ecks oder eines Polygons, aufweist. Das Filtersieb 6 kann aus Metall oder einem Kunststoff bestehen oder als Siebblech ausgeführt sein. Weiterhin ist es denkbar, dass das Filtersieb 6 ebenfalls aus einem dehnbaren Material, vorzugsweise aus dem gleichen Elastomer wie das zweite Segment 5 und die Rahmenelemente 3, besteht. In dieser Ausführungsform kann der Filterabschnitt 2 komplett ohne zweites hydraulikmittelundurchlässiges Segment 5 ausgeführt sein. Ebenso denkbar ist eine Ausführungsform eines Ringfilters 1, dessen Filterabschnitt 2 aus mehreren nicht dehnbaren ersten Segmenten 4 besteht, die mittels mehrerer zweiter dehnbarer Segmente 5 verbunden sind.

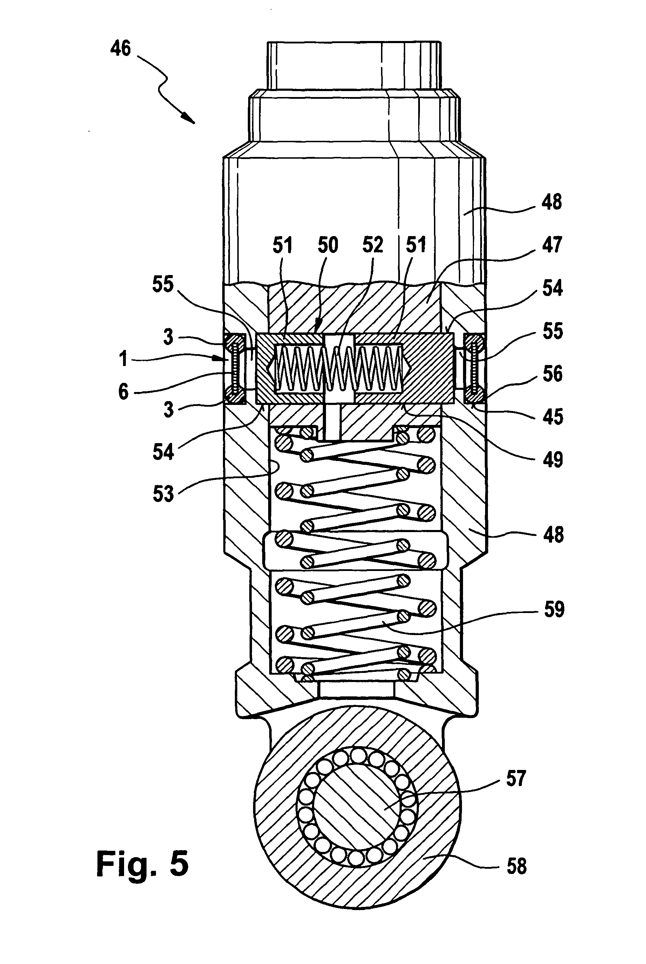

Figur 5 zeigt einen weiteren möglichen Verwendungszweck des erfindungsgemäßen Ringfilters 1. In der Figur ist ein schaltbarer Rollenstößel 46 eines nicht dargestellten Ventiltriebs einer Brennkraftmaschine dargestellt, der in zwei verschiedenen Schaltzuständen betrieben werden kann. Dabei ist der Einsatz des erfindungsgemäßen Ringfilters 1 nicht auf Rollenstößel 46 beschränkt. Vielmehr steht der Rollenstößel 46 für sämtliche Schaltelemente eines schaltbaren Ventiltriebs wie beispielsweise Tassenstößel, Abstützelemente und dergleichen. Der Rollenstößel 46 besteht aus einem inneren und einem äußeren Kolben 47, 48, wobei der äußere Kolben 48 hohl ausgeführt ist. Der innere Kolben 47 ist innerhalb des äußeren Kolbens 48 axial verschiebbar angeordnet. Innerhalb einer Radialbohrung 49 des inneren Kolbens 47 ist ein Koppelglied 50 angeordnet. Das Koppelglied 50 besteht aus zwei topfförmig ausgebildeten Koppelkolben 51, deren offene Seiten einander zugewandt sind. Ein zweites Federelement 52 beaufschlagt die Koppelkolben 51 mit einer die Koppelkolben 51 aus der Radialbohrung 49 drängenden Kraft. In der inneren Mantelfläche 53 des äußeren Kolbens 48 sind zwei Vertiefung 54 derart ausgebildet, dass die Koppelkolben 51 mittels der Federkraft des zweiten Federelementes 52 in diese gedrängt werden können. Jede Vertiefung 54 ist mit einer radialen Bohrung 55 versehen, die in eine Ringnut 56 mündet, die in der Außenmantelfläche des äußeren Kolbens 48 ausgebildet ist. Im dargestellten Zustand sind die Koppelkolben 51 in die Vertiefung 54 gedrängt und damit der äußere mit dem inneren Kolben 48, 47 gekoppelt.

Während des Betriebs der Brennkraftmaschine wälzt sich ein nicht dargestellter Nocken an einer auf einem Zapfen 57 wälzgelagerten Nockenrolle 58 ab. Der Zapfen 57 ist fest mit dem äußeren Kolben 48 verbunden, wodurch während des Abwälzens des Nockens an der Nockenrolle 58 der äußere Kolben 48 in dessen axialer Richtung bewegt wird. Im dargestellten Zustand des Rollenstößels 46 (äußerer Kolben 48 mit dem inneren Kolben 47 über das Koppelglied 50 gekoppelt) wird die axiale Bewegung auf den inneren Kolben 47 übertragen, der eine nicht dargestellte Stößelstange antreibt. Zum Entkoppeln des inneren Kolbens 47 vom äußeren Kolben 48 werden die Stirnflächen der Koppelkolben 51 über die Ringnut 56 und die radialen Bohrungen 55 mit Hydraulikmittel beaufschlagt. Dadurch werden die Koppelkolben 51 in die Radialbohrung 49 verdrängt und der äußere Kolben 48 kann frei gegen den inneren Kolben 47 in deren axialen Richtung schwingen. Zwischen dem äußeren Kolben 47 und dem inneren Kolben 48 ist ein drittes Federelement 59 angeordnet, welches den äußeren Kolben 48 im nicht gekoppelten Zustand des Rollenstößels 46 an den Nocken drängt.

Die Abmessungen der Koppelkolben 51 sind den Abmessungen der Innenmantelfläche der Radialbohrung 49 angepasst. Schmutzpartikel die über die Ringnut 56 in die radialen Bohrungen 55 eindringen, können in den Zwischenraum zwischen den Koppelkolben 51 und der Innenmantelfläche der Radialbohrung 49 gelangen und ein Verklemmen der Koppelkolben 51 bewirken. Um dies zu verhindern ist innerhalb der Ringnut 56 ein erfindungsgemäßer Ringfilter 1 angebracht.

Der erfindungsgemäße Ringfilter 1 eignet sich für den Einsatz in sämtlichen Hydrauliksystemen, in denen Hydraulikmittel über eine Ringnut von einem Maschinenteil auf ein anderes übertragen wird. Beispielsweise sind hier Wegeventile, schaltbare Nockenfolger, Spielausgleichselemente, Drehdurchführungen, beispielsweise vom Nockenwellenlager in die Nockenwelle, und dergleichen angeführt.

### Bezugszeichen

- 1: Ringfilter
- 2: Filterabschnitt
- 3: Rahmenelement
- 4: erstes Segment
- 5: zweites Segment
- 6: Filtersieb
- 7: Ende
- 8: Steuerventil
- 9: Vorrichtung
- 10: Stator
- 11: Rotor
- 12: Antriebsrad
- 13: Ausnehmung
- 14: Seitenwand
- 15: erster Seitendeckel
- 16: zweiter Seitendeckel
- 17: Verbindungselement
- 18: Flügelnut
- 19: Flügel
- 20: erste Druckkammer
- 21: zweite Druckkammer
- 22: Nutgrund
- 23: Blattfederelement
- 24: erste Druckmittelleitung
- 25: zweite Druckmittelleitung
- 26: Hydraulikmittelpumpe
- 27: Tank
- 28: Pfeil
- 29: Zentralbohrung
- 30: Hydraulikmittelkreislauf
- 31: Stellglied
- 32: erstes Federelement
- 33: Ventilgehäuse
- 34: erste Ringnut
- 35: erste Öffnung
- 36: Steuerkolben
- 37: zweite Ringnut
- 38: dritte Ringnut
- 39: vierte Ringnut
- 40: zweite Öffnung
- 41: dritte Öffnung
- 42: erste Steuerkante
- 43: zweite Steuerkante
- 44: dritte Steuerkante
- 45: Filternut
- 46: Rollenstößel
- 47: innerer Kolben
- 48: äußerer Kolben
- 49: Radialbohrung
- 50: Koppelglied
- 51: Koppelkolben
- 52: zweites Federelement
- 53: innere Mantelfläche
- 54: Vertiefung
- 55: Bohrung
- 56: Ringnut
- 57: Zapfen
- 58: Nockenrolle
- 59: drittes Federelement

- d1: Innendurchmesser
- d2: Innendurchmesser
- d3: Außendurchmesser
- d4: Außendurchmesser

- P: Hydraulikmittelanschluss
- T: Tankanschluss
- T₁: radialer Tankanschluss
- T₂: axialer Tankanschluss
- A: erster Arbeitsanschluss
- B: zweiter Arbeitsanschluss

## Patentansprüche

1. Ringfilter (1) zur Filtration von Hydraulikmittel, mit
• einem Filterabschnitt (2),
• der Im Wesentlichen in Form einer Zylindermantelfläche ausgeführt ist, wobei
• der Ringfilter (1) in Umfangsrichtung in sich geschlossen und reversibel dehnbar ausgeführt ist, **dadurch gekennzeichnet, dass**
• der Filterabschnitt (2) aus mindestens einem ersten und einem zweiten Segmenten (4, 5) besteht,
• die abwechselnd in Umfangsrichtung angeordnet sind,
• wobei das zweite Segment (5) hyraulikmittelundurchlässig ist und aus einem dehnbaren Material besteht und
• das erste Segment (4) als nicht dehnbares Filtersieb (6) ausgebildet ist.

2. Ringfilter (1) nach Anspruch 1, **dadurch gekennzeichnet, dass** das Filtersieb (6) aus Metall besteht.

3. Ringfilter (1) nach Anspruch 1, **dadurch gekennzeichnet, dass** das Filtersieb (6) aus Kunststoff besteht.

4. Ringfilter (1) nach Anspruch 1, **dadurch gekennzeichnet, dass**
• an den in axialer Richtung liegenden Stirnseiten des Filterabschnitts (2) jeweils ein ringförmig ausgebildetes Rahmenelement (3) vorgesehen ist,
• welches entlang seines gesamten Umfangs mit dem Filterabschnitt (2) verbunden ist
• und aus einem dehnbaren Material besteht.

5. Verwendung eines Ringfilters (1) nach Anspruch 1, wobei der Ringfilter (1) innerhalb einer ersten Ringnut (34) eines Steuerventils (8) eines Nockenwellenverstellers angeordnet ist, wobei die erste Ringnut (34) in eine Außenmantelfläche eines Ventilgehäuses (33) des Steuerventils (8) eingebracht ist und als Anschluss für Druckmittel dient.

6. Verwendung eines Ringfilters (1) nach Anspruch 1, wobei der Ringfilter (1) innerhalb einer Ringnut (56) eines hydraulischen Schaltelements eines schaltbaren Ventiltriebs angeordnet ist, wobei die Ringnut (56) in eine Außenmantelfläche des Schaltelements des Ventiltriebs eingeformt ist und als Druckmittelanschluss dient.

## Revendications

1. Filtre annulaire (1) pour filtrer un fluide hydraulique, comprenant :
- une portion de filtre (2),
- qui est réalisée essentiellement en forme de surface d'enveloppe cylindrique,
- le filtre annulaire (1) étant fermé sur lui-même dans la direction périphérique et étant réalisé de manière extensible réversible,
**caractérisé en ce que**
- la portion de filtre (2) se compose d'au moins un premier et un deuxième segment (4, 5),
- qui sont disposés en alternance dans la direction périphérique,
- le deuxième segment (5) étant imperméable aux fluides hydrauliques et se composant d'un matériau extensible, et
- le premier segment (4) étant réalisé sous la forme d'un tamis filtrant non extensible (6).

2. Filtre annulaire (1) selon la revendication 1, **caractérisé en ce que** le tamis filtrant (6) est en metal.

3. Filtre annulaire (1) selon la revendication 1, **caractérisé en ce que** le tamis filtrant (6) est en plastique.

4. Filtre annulaire (1) selon la revendication 1, **caractérisé en ce que**
- l'on prévoit sur les côtés frontaux de la portion de filtre (2) situés dans la direction axiale, à chaque fois un élément de cadre (3) de forme annulaire,
- qui est connecté le long de toute sa périphérie à la portion de filtre (2)
- et qui se compose d'un matériau extensible.

5. Utilisation d'un filtre annulaire (1) selon la revendication 1, le filtre annulaire (1) étant disposé à l'intérieur d'une première rainure annulaire (34) d'une soupape de commande (8) d'un déphaseur d'arbre à cames, la première rainure annulaire (34) étant incorporée dans une surface d'enveloppe extérieure d'un boitier de soupape (33) de la soupape de commande (8) et servant de raccord pour du fluide sous pression.

6. Utilisation d'un filtre annulaire (1) selon la revendication 1, dans laquelle le filtre annulaire (1) est disposé à l'intérieur d'une rainure annulaire (56) d'un élément de commutation hydraulique d'un mécanisme de soupape commutable, la rainure annulaire (56) étant façonnée dans une surface d'enveloppe extérieure de l'élément de commutation du mécanisme de soupape et servant de raccord de fluide sous pression.

## Claims

1. Ring filter (1) for the filtration of hydraulic medium, having
• a filter section (2),
• which is designed substantially in the form of a circumferential surface of a cylinder, wherein
• the ring filter (1) is designed such that it is intrinsically closed in the circumferential direction and is reversibly stretchable, **characterized in that**
• the filter section (2) comprises at least one first and one second segment (4,5)
• which are arranged in an alternating manner in the circumferential direction,
• with the second segment (5) being impermeable to hydraulic medium and being composed of a stretchable material, and
• the first segment (4) being designed as a non-streatchable filter screen (6).

2. Ring filter (1) according to Claim 1, **characterized in that** the filter screen (6) is composed of metal.

3. Ring filter (1) according to Claim 1, **characterized in that** the filter screen (6) is composed of plastic.

4. Ring filter (1) according to Claim 1, **characterized in that**
• a frame element (3) of annular design is provided in each case on the end sides of the filter section (2), which end sides lie in the axial direction,
• said frame element being connected along its entire circumference to the filter section (2),
• and being composed of a stretchable material.

5. Use of a ring filter (1) according to Claim 1, wherein the ring filter (1) is arranged within a first annular groove (34) of a control valve (8) of a camshaft adjuster, and wherein the first annular groove (34) is placed into an outer circumferential surface of a valve housing (33) of the control valve (8) and serves as a connection for the pressure medium.

6. Use of a ring filter (1) according to Claim 1, wherein the ring filter (1) is arranged within an annular groove (56) of a hydraulic swithching element of a switchable valve timing gear and wherein the annular groove (56) is formed in an outer circumferential surface of the switching element of the valve timing gear and serves as a pressure medium connection.
